# EUROPÄISCHE PATENTSCHRIFT

(11) **EP 3 740 456 B1**
(45) Veröffentlichungstag und Bekanntmachung des Hinweises auf die Patenterteilung: **26.01.2022**
(21) Anmeldenummer: 18826585.4
(22) Anmeldetag: 17.12.2018
(51) Int. Cl.: C02F 1/52, C02F 1/20, C02F 1/66, C02F 11/00

(54) **VERFAHREN UND ANORDNUNG ZUR RÜCKGEWINNUNG VON MAGNESIUMAMMONIUMPHOSPHAT**
METHOD AND ASSEMBLY FOR RECOVERING MAGNESIUM AMMONIUM PHOSPHATE
PROCÉDÉ ET DISPOSITIF DE RÉCUPÉRATION DE PHOSPHATE D'AMMONIUM DE MAGNÉSIUM

(30) Priorität: 18.01.2018 DE 102018101081
(43) Veröffentlichungstag der Anmeldung: 25.11.2020
(73) Patentinhaber: CNP CYCLES GMBH, 63791 Karlstein am Main (DE)
(72) Erfinder: KLAMP, Thomas, 63456 Hanau (DE); ORTWEIN, Bernhard, 91052 Erlangen (DE)
(74) Vertreter: Stoffregen, Hans-Herbert
(86) Internationale Anmeldenummer: PCT/EP2018/085295
(87) Internationale Veröffentlichungsnummer: WO 2019/141460

(56) Entgegenhaltungen:
- EP-A1- 2 028 161
- EP-A1- 3 228 599
- US-A- 3 397 788

## Beschreibung

Die Erfindung bezieht sich auf ein Verfahren zur Rückgewinnung von Magnesiumammoniumphosphat (MAP) aus Schlamm, der einem Reaktionsbehälter zugeführt wird, in dem ein aerobes Milieu herrscht und in dem der Schlamm durch eine Belüftung unterstützt im Kreislauf geführt wird, wobei dem Schlamm kationisches Magnesium, wie Magnesiumchlorid, zugegeben wird und aus dem Schlamm ausgefallene Magnesiumammoniumphosphat-Kristalle (MAP-Kristalle) über eine im Bodenbereich des ersten Reaktionsbehälters vorhandene Entnahmeeinrichtung entfernt werden.

Ferner nimmt die Erfindung Bezug auf eine Anordnung zur Gewinnung von Magnesiumammoniumphosphat in der Schlammbehandlung umfassend einen Reaktionsbehälter mit einem zylindrischen oberen Abschnitt, der in einen trichter- oder konusförmig ausgebildeten unteren Abschnitt übergeht, von dem seinerseits eine Entnahmeeinrichtung für Magnesiumammoniumphosphat-Kristalle ausgeht. In dem oberen Abschnitt sollte zumindest eine Belüftungseinrichtung vorhanden sein.

Phosphor ist für die Organismen ein lebenswichtiger Stoff, der in der Erdkruste in gebundener Form vorkommt und zumindest in der Flora und Fauna bzw. lebenden Organismen nicht substituierbar ist. Phosphor ist beispielsweise bei der Produktion von Lebensmitteln, beim Wachstum von Pflanzen als Dünger und in der Industrie wie bei der Eisen- und Stahlerzeugung erforderlich. Insbesondere in der Landwirtschaft wird Phosphor umfassend eingesetzt.

Auch wenn die natürlichen Vorkommen von Phosphor über eine Vielzahl von Jahrzehnten hinaus nicht erschöpft zu sein scheinen, sind umfassende Bestrebungen im Gange, Phosphor rückzugewinnen. Dabei kommt der Wiedergewinnung von Phosphor aus Abwasser besondere Bedeutung zu.

Es gibt eine Vielzahl von Verfahren, um Phosphor rückzugewinnen, zum Beispiel aus Schlammwasser durch Adsorption, Fällung, Kristallisation oder durch Einsatz von Pellets oder aus Faulschlamm mittels oder ohne Laugung oder aus Asche durch deren thermische Behandlung.

Der DE 101 12 934 B4 ist ein Verfahren zu entnehmen, bei dem Faulschlamm belüftet wird, um durch CO₂-Strippung den pH-Wert zu erhöhen, um bei gleichzeitiger Zugabe von Magnesiumchlorid MAP auszufällen.

Das gleiche Prinzip gelangt nach der EP 2 028 161 B1 zur Anwendung. Dabei wird ein Reaktionsbehälter benutzt, in dem Schlamm im Kreislauf geführt wird. Ausfallende MAP-Kristalle lagern sich in einem trichterförmig ausgebildeten Bodenbereich an, um sodann über eine zweiseitig absperrbare Entnahmeeinrichtung abgezogen zu werden. Dabei werden sowohl die MAP-Kristalle als auch Schlamm abgezogen.

In dem Schlamm befinden sich neben den problemlos zu separierenden Makrokristallen auch Mikro- oder Kleinstkristalle, die mit üblichen Trennverfahren nicht separierbar sind.

Die DE 10 2008 050 349 B4 beschreibt ein Verfahren zur Ausfällung von Phosphor aus Phosphat belastetem Abwasser unter Bildung von MAP-Kristallen. Das Abwasser durchläuft zunächst eine anaerob-Stufe, das sodann in einer Ausstrip-Stufe mit Luft und anschließend in einer Kristallisations-Stufe mit Magnesiumchlorid versetzt wird. Sich bildende MAP-Pellets werden vom Boden des Reaktors entfernt.

Aus der JP 2004305991 A sind eine Vorrichtung und ein Verfahren zur Rückgewinnung von Magnesiumammoniumphosphat (MAP) bekannt, die bzw. das bei der Abwasser- und Klärschlammbehandlung Anwendung findet. Dabei wird das Schlamm enthaltende Abwasser mit Luft und Magnesiumchlorid vermischt. Die schweren MAP-Partikel werden in einen unteren Trichter der Vorrichtung geleitet und von dort durch ein Rohr abgezogen. Die Literaturstelle Stumpf, D., "Phosphorrecycling durch MAP-Ausfällung im kommunalen Faulschlamm", bietet einen Überblick über bestehende Verfahren zum Phosphorrecycling durch Fällung von MAP und zur Abtrennung des Fällungsproduktes. Herkömmlicher Weise geschieht dies nach der anaeroben Behandlung von Klärschlamm und/oder Primärschlamm. Die MAP-Fällung wird in der Regel in Fällungsreaktoren oder Fließbettreaktoren durchgeführt, bei denen der pH-Wert durch Laugenzugabe oder Luftstrippung erhöht wird, sowie mit oder ohne Zugabe von Magnesium-Fällmitteln. MAP wird herkömmlich direkt aus dem Faulschlamm oder aus Prozesswasser der Schlammentwässerung ausgefällt. Das ausgefällte MAP kann durch Siebe, Hydrozyklone oder Zentrifugen abgetrennt werden.

Weitere relevante Verfahren sind aus EP3228599, JPH0899091 und JP3362276 bekannt.

Der vorliegenden Erfindung liegt die Aufgabe zugrunde, ein Verfahren und eine Anordnung der eingangs genannten Art so weiterzubilden, dass eine hohe Rückgewinnung von Phosphor ermöglicht wird. Insbesondere sollen auch Kleinst- bzw. Mikrokristalle für die Phosphorrückgewinnung gleichfalls zur Verfügung stehen.

Zur Lösung der Aufgabe wird verfahrensmäßig im Wesentlichen vorgeschlagen, dass in der Entnahmeeinrichtung gesammelte Magnesiumammoniumphosphat-Kristalle enthaltende Substanzen aufgelockert und/oder gespült werden, wobei Gas und Flüssigkeit in die Entnahmeeinrichtung alternierend und/oder pulsierend und/oder gleichzeitig eingeleitet werden, und dass aus der Entnahmeeinrichtung behälterseitig austretende Substanzen mittels einer Führung durch einen trichter- oder konusförmig ausgebildeten unteren Abschnitt des Reaktionsbehälters hindurchgeführt und in einen angrenzenden zylindrischen oberen Abschnitt dortiger Strömung ausgesetzt werden.

Erfindungsgemäß erfolgt in der Entnahmeeinrichtung ein Auflockern und/oder Spülen der angesammelten Substanzen, wodurch eine Klassierung der MAP-Kristalle derart erfolgt, dass schwere MAP-Kristalle im unteren Bereich der Entnahmeeinrichtung verbleiben, wohingegen kleinere bzw. Kleinst-MAP-Kristalle sowie Schlammpartikel und -flocken aufgetrieben und in den Reaktionsbehälter zurückgeschwemmt werden. Hierdurch ergibt sich der Vorteil, dass die Kristalle dem im Reaktionsbehälter ablaufenden Prozess unterzogen werden, so dass ein weiteres Wachstum erfolgen kann, also Kristalle in einer Größe entstehen, die mit üblichen Maßnahmen separierbar sind.

Zum Auflockern bzw. Spülen wird in die Entnahmeeinrichtung Gas bzw. Flüssigkeit eingeleitet, wobei insbesondere vorgesehen ist, dass das Gas, wie Luft, bzw. Flüssigkeit, wie Wasser, insbesondere Brauchwasser, im Bodenbereich des vorzugsweise eine hohlzylindrische Innengeometrie aufweisenden Innenraums der Entnahmeeinrichtung eingeleitet wird.

Dabei werden Flüssigkeit und Gas alternierend und/oder pulsierend und/oder gleichzeitig in die Entnahmeeinrichtung eingeleitet.

Abweichend vom Stand der Technik ist des Weiteren vorgesehen, dass zur Realisierung der Erfindung die Entnahmeeinrichtung nur bodenseitig verschließbar sein muss, so dass sich eine einfache Konstruktion ergibt; denn nach der EP 2 028 161 B1 weist die Entnahmeeinrichtung zwingend reaktionsbehälterseitig einen Schieber auf, der dann die Entnahmeeinrichtung verschließt, wenn die die MAP-Kristalle enthaltenden Substanzen abgezogen werden sollen.

Es ist vorgesehen, dass die behälterseitig aus der Entnahmeeinrichtung austretenden Substanzen mittels einer Führung durch den trichter- oder konusförmigen unteren Abschnitt des Reaktionsbehälters hindurch zu einem angrenzenden zylindrischen oberen Abschnitt geführt werden. Dabei ist die Führung insbesondere eine hohlzylinderförmige Einrichtung wie Rohr, das entnahmeeinrichtungsseitig erweitert ist, wobei Längsachse der Führung mit Längsachse der Entnahmeeinrichtung zusammenfällt.

Durch die diesbezüglichen Maßnahmen ist sichergestellt, dass die ausgespülten Mikrokristalle und Schlammflocken dem Prozess wieder zugeführt werden, um ein Wachsen der Mikro- bzw. Kleinstkristalle zu einer Größe zu ermöglichen, dass ein problemloses Separieren nach einer späteren Entnahme aus dem Entnahmetrichter möglich ist.

Eine Anordnung der eingangs genannten Art zeichnet sich insbesondere dadurch aus, dass die Entnahmeeinrichtung zumindest einen ersten Anschluss für einzuleitendes Gas und zumindest einen zweiten Anschluss für einzuleitende Flüssigkeit aufweist, und dass im unteren Abschnitt eine auf die Entnahmeeinrichtung ausgerichtete eine hohlzylinderförmige Geometrie mit entnahmeeinrichtungsseitig verlaufender Erweiterung aufweisende Führung zum Leiten von in der Entnahmeeinrichtung aufgeschwemmten Substanzen in den zylindrischen oberen Abschnitt angeordnet ist.

In Weiterbildung ist vorgesehen, dass insbesondere im Bodenbereich der Entnahmeeinrichtung mehrere erste Anschlüsse und/oder mehrere zweite Anschlüsse, vorzugsweise gleichmäßig verteilt um den Umfang der Entnahmeeinrichtung, vorgesehen sind.

Bevorzugterweise sind alternierend erste und zweite Anschlüsse mit der Entnahmeeinrichtung verbunden.

Der Innenraum der Entnahmeeinrichtung weist eine Zylinder- oder Konusgeometrie auf.

Insbesondere und abweichend vom Stand der Technik ist vorgesehen, dass die Entnahmeeinrichtung behälterseitig verschlussfrei ausgebildet ist.

Bodenseitig sollte die Entnahmeeinrichtung eine Verschlusseinrichtung, wie Absperrarmatur oder Schleusenrad, aufweisen.

Kann das erfindungsgemäße Verfahren mit einem einzigen Reaktionsbehälter durchgeführt werden, wie dies nach der EP 2 028 161 B1 möglich ist, so ist jedoch insbesondere vorgesehen, dass Schlamm von einem ersten Reaktorbehälter einem zweiten Reaktorbehälter zugeführt wird, in dem zur Phosphorrücklösung ein anaerobes Milieu eingestellt wird, und dass in dem zweiten Reaktionsbehälter ausgefällte Magnesiumammoniumphosphat-Kristalle dem ersten Reaktionsbehälter zugeführt werden.

Es werden zwei Reaktionsbehälter genutzt, die bezüglich ihres Milieus unterschiedlich eingestellt sind derart, dass im ersten Behälter ein aerobes Milieu und im zweiten Behälter ein anaerobes Milieu vorhanden ist. Letzteres ermöglicht eine Phosphorrücklösung.

Dabei wird der Schlammablauf aus dem ersten Reaktionsbehälter dem zweiten Reaktionsbehälter zugeführt.

Haben im ersten Reaktionsbehälter unter aeroben Bedingungen im Faulschlamm enthaltene Bakterien parallel zur Ortho-Phosphat-Kristallisation vermehrt Phosphat aufgenommen, so kann unter den anaeroben Bedingungen im zweiten Reaktionsbehälter eine Phosphorrücklösung stattfinden, die zu einer weiteren MAP-Kristallbildung bzw. einem Kristallwachstum führt. Kristallbildung schließt dabei auch Mikrokristalle ein, die dem ersten Reaktionsbehälter als Impfkristalle zugeführt werden.

Es besteht die Möglichkeit, dass Schlamm, dem Grunde nach ein Schlamm/WasserGemisch, kontinuierlich oder batchweise aus dem vorzugsweise konusförmig ausgebildeten Bodenbereich des zweiten Reaktionsbehälters abgezogen und dem ersten Reaktionsbehälter wieder zugeführt wird. Es erfolgt ein Rezirkulieren.

Es wird ein Kreislauf gebildet, in dem sich der erste und zweite Reaktionsbehälter befindet, um aus dem ersten Reaktionsbehälter Schlamm bzw. Schlamm/Wasser-Gemisch dem zweiten Reaktionsbehälter zuzuführen, von dem zumindest ein Teil wiederum dem ersten Reaktionsbehälter zurückgeführt, also rezirkuliert wird.

Der Ablauf aus dem zweiten Reaktionsbehälter erfolgt insbesondere über eine Abzugspumpe.

Zulaufendes Schlamm/Wasser-Gemisch, das vereinfacht als Schlamm bezeichnet wird, das nicht in den ersten Reaktionsbehälter rezirkuliert wird, gelangt zum Beispiel über eine Abzugspumpe optional zu einem Abscheider, in dem MAP-Kristalle abgeschieden werden, die sodann dem ersten Reaktionsbehälter zugeführt werden. Bei dem Abscheider handelt es sich insbesondere um einen Zyklon-Abscheider, wie Hydrozyklon.

Es besteht aber auch die Möglichkeit, dass das dem zweiten Reaktionsbehälter entnommene Schlamm/Wasser-Gemisch, das nicht in den ersten Reaktionsbehälter rezirkuliert wird, den optional nachgeschalteten Abscheider umgeht, um unmittelbar einer Entwässerung zugeführt zu werden.

Entsprechend dem Stand der Technik ist vorgesehen, dass der pH-Wert in dem ersten Reaktionsbehälter durch CO₂-Strippung bei gleichzeitigem Lösen von O₂ eingestellt wird. Letzteres stellt ein aerobes Milieu ein.

Das Ausstrippen von Kohlendioxid erfolgt durch eine fein- mittel- oder grobblasige Druckbelüftung im ersten Reaktionsbehälter, wodurch erwähntermaßen der pH-Wert eingestellt, d. h. erhöht wird. Demgegenüber wird im zweiten Reaktionsbehälter nur eine schwache Rührbewegung durchgeführt, so dass sich ein anaerobes Milieu ausbilden kann, wodurch die Rücklösung von Ortho-Phosphat ermöglicht wird. Infolgedessen können sich im zweiten Reaktionsbehälter weitere MAP-Kristalle bilden, die sogenannte Mikrokristalle einschließen und als Impfkristalle oder Kristallkeime in den ersten Reaktionsbehälter gefördert werden.

In dem ersten Reaktionsbehälter findet das Kristallwachstum statt, indem Mikrokristalle zu Makrokristallen heranwachsen. Demgegenüber bilden sich im anaeroben zweiten Reaktionsbehälter durch die Rücklösung im Wesentlichen Mikrokristalle aus. Mikrokristalle, auch Kleinstkristalle genannt, dienen zum Anzüchten von großen Kristallen; denn Mikrokristalle bzw. Kleinstkristalle weisen eine Größe bzw. ein Gewicht dergestalt auf, dass sich diese nur sehr schlecht oder überhaupt nicht aus Schlamm mit üblichen Trenntechniken separieren lassen. Demgegenüber lassen sich die Makrokristalle gut aus dem Schlamm abtrennen.

Zum Belüften des Schlamms bzw. Schlamm/Wasser-Gemischs im ersten Reaktionsbehälter ist vorgesehen, dass der erste Reaktionsbehälter in einen oberen und einen unteren Abschnitt unterteilt wird, wobei der untere Abschnitt eine Konusform aufweisen sollte, der in die Entnahmeeinrichtung für MAP-Kristalle übergeht. Der obere Abschnitt weist eine Zylinderform auf und ist in einen inneren und einen äußeren Bereich unterteilt, und zwar durch eine im Schnitt einen Kreis bildende Trennwand, so dass ein innerer zylindrischer Bereich und ein äußerer kreiszylindrischer Bereich entstehen.

Die Trennwand, die auch als zylindrischer Schachteinbau bezeichnet werden kann, beginnt im oberen Bereich des ersten Reaktionsbehälters unterhalb des Schlammspiegels und endet im unteren Bereich im Übergang zwischen dem oberen Abschnitt und dem eine Konus- oder Kegelform aufweisenden unteren Abschnitt. Folglich ist der erste Reaktionsbehälter in drei Bereiche unterteilt, und zwar einen inneren zylindrischen Bereich, einen zylinderringförmigen äußeren Bereich und den konus- bzw. kegelförmigen unteren Abschnitt.

Die Belüftung des Schlamms erfolgt im Inneren des zylindrischen inneren Bereichs, insbesondere über Membranbelüfter. Dabei ist insbesondere vorgesehen, dass innerhalb des inneren Bereichs über die Höhe des Reaktionsbehälters entweder nur im unteren Bereich oder in zwei zueinander beabstandeten Ebenen Belüftungselemente wie Membranbelüfter angeordnet werden.

Der über die Belüftungselemente erfolgte Lufteintrag erfüllt dabei die Aufgaben:
- Durchmischung des ersten Reaktionsbehälters bzw. Ausbildung eines gerichteten Strömungsprofils des Schlamms bzw. Schlamm/Wasser-Gemisches,
- Klassierung von MAP-Kristallen,
- Gasaustausch im Schlamm/Wasser-Gemisch zur CO₂-Strippung.

Die Durchmischung im ersten Reaktionsbehälter bzw. die Ausbildung der gewünschten gerichteten Strömung des Schlamms bzw. Schlamm/Wasser-Gemischs im inneren Bereich des Reaktionsbehälters über die Eintragung von Luft erfolgt aufgrund des hieraus resultierenden Dichteunterschieds zwischen dem "schwereren" Medium im unbelüfteten äußeren Zylinderringabschnitt und dem "leichteren" Medium im belüfteten inneren Bereich sowie durch die Austrittskraft von Luftblasen und der damit initiierten Auftriebskraft. Durch die Auftriebskraft der eingetragenen Luftblasen wird das Schlamm/Wasser-Gemisch aus dem Zylinderringabschnitt unterhalb der Trennwand zwischen innerem und äußerem Bereich zur Behältermitte angesaugt, mit Luft durchsetzt und sodann in Auftriebsrichtung im inneren Bereich in einer Vertikalströmung zur Schlammoberfläche getrieben. An der Oberfläche gast sodann das Schlamm/WasserGemisch aus und strömt horizontal oberhalb der Trennwand nach außen zum peripher verlaufenden Zylinderringabschnitt. Sodann erfolgt im äußeren unbelüfteten Zylinderringabschnitt die vertikale Abwärtsbewegung in Richtung des Behälterbodens, also des unteren die Kegel- bzw. Konusform aufweisenden Abschnitts.

Antrieb dieses beschriebenen Kreislaufes ist die Energieeintragung über die adiabate Kompression von Luft in einem Verdichter und der anschließenden polytropen Expansion nach der Eintragung in das Schlamm/Wasser-Gemisch.

Durch die Energieeintragung wird auch die Auftriebskraft im inneren Bereich des zylindrischen Bereichs eingestellt. Hierdurch erfolgt ein Klassieren der MAP-Kristallgröße, denn je größer die Kristallstruktur ist, desto größer ist deren Gewicht und infolgedessen deren schwerkraftbedingte Sedimentationsgeschwindigkeit. Ab einer bestimmten Größe und damit Gewicht der Kristalle ist die Auftriebskraft nicht mehr hinreichend, um die Kristalle in die vertikale Aufwärtsströmung im zylindrischen inneren Bereich mitzunehmen, so dass die Kristalle in dem unteren Bereich, also in dem konus- bzw. kegelförmigen unteren Abschnitt sedimentieren und sich dort absetzen.

Demgegenüber können kleine Kristalle, also solche mit geringem Gewicht, mit der Strömung mitgerissen werden, so dass sich diese weiterhin im Prozesskreislauf solange befinden, bis ein Wachsen zu einer Größe gegeben ist, dass durch die Auftriebskräfte das Gewicht der Kristalle nicht überwunden werden kann mit der Folge, dass ein Absetzen im unteren Bereich erfolgt.

Die Lufteintragung im unteren Bereich des inneren Bereichs des oberen Abschnitts des ersten Reaktionsbehälters führt auch zu einer Strippung von CO₂ aus dem Schlamm/Wasser-Gemisch. Gelöstes Kohlendioxid lässt sich über die aufströmende Luft abtrennen und gast an der Schlammoberfläche gemeinsam mit der Luft aus. Gleichzeitig wird Sauerstoff eingetragen und das Milieu wird dadurch aerob.

Die durch die Strippung erzielte pH-Wert-Anhebung initiiert mit der gleichzeitigen Bereitstellung von Magnesium über die Dosierung von insbesondere Magnesiumchlorid oder einer anderen geeigneten Magnesiumverbindung die MAP-Kristallbildung bzw. das Kristallwachstum.

Die Beschickung des ersten Reaktionsbehälters mit Schlamm erfolgt in den inneren belüfteten Bereich auf den Schlammspiegel. Auf die Schlammoberfläche vorzugsweise über den zylinderringförmigen äußeren Bereich wird das kationisch gebundene Magnesium, insbesondere in Form von Magnesiumchlorid, dosiert.

Insbesondere ist vorgesehen, dass der Schlamm bzw. das Schlamm/Wasser-Gemisch vom äußeren Zylinderringabschnitt abgezogen wird. Daher ist in Weiterbildung vorgesehen, dass sich im äußeren Bereich des oberen Abschnittes des ersten Reaktionsbehälters ein Ablaufschacht befindet. Dabei sollte der Ablauf über das Verdrängerprinzip erfolgen. Mit der Beschickung des ersten Reaktionsbehälters mit Schlamm wird im gleichen Volumenanteil Schlamm aus dem Reaktionsbehälter zeitgleich ausgeschwemmt. Dabei erfolgt die Verdrängung aus dem unteren Bereich des äußeren Zylinderringabschnitts in einen Ablaufkanal hinein. Ablaufendes Schlamm/Wasser-Gemisch fließt im Ablaufkanal zunächst vom Bodenbereich des äußeren Bereichs ausgehend aufwärts und über eine Ablaufschwelle in einen Auslaufbereich. Der Ablauf von Schlamm/Wasser-Gemisch wird sodann von dem ersten Reaktionsbehälter in den zweiten Reaktionsbehälter geleitet.

Der zweite Reaktionsbehälter wird zwar geringfügig durchmischt, ohne jedoch belüftet zu werden. Hierdurch entstehen die gewünschten anaeroben Milieubedingungen, so dass eine Phosphorrücklösung stattfinden kann, die erwähntermaßen zu einer weiteren MAP-Kristallbildung oder -wachstum führt. Die so entstandenen Kristalle sammeln sich im gleichfalls insbesondere konus- bzw. kegelförmig ausgebildeten unteren Bereich des zweiten Reaktionsbehälters, so dass diese durch kontinuierliches oder intervallartiges Abziehen von Schlamm/Wasser-Gemischmenge in den ersten Reaktionsbehälter gelangen. Es erfolgt ein Rezirkulieren von Schlamm bzw. Schlamm/Wasser-Gemischmenge.

Der Ablauf aus dem zweiten Reaktionsbehälter erfolgt mittels einer Abzugspumpe aus dem oberen zylindrischen Behälterteil oberhalb des Rührwerkes.

Es besteht die Möglichkeit, dass der Faulschlamm vor der Beschickung in den ersten Reaktionsbehälter optional durch Zugabe von Säure leicht angesäuert wird, um die Ortho-Phosphat-Konzentration für die Intensivierung der anschließenden MAP-Kristallisation im Zulauf zum ersten Reaktionsbehälter zu erhöhen.

Eine Anordnung zur Rückgewinnung von Magnesiumammoniumphosphat aus Schlamm zeichnet sich daher insbesondere dadurch aus, dass die Anordnung einen ersten Reaktionsbehälter mit einem einen inneren und einen äußeren Bereich aufweisenden zylindrischen oberen Abschnitt, der in einen eine Konusform aufweisenden unteren Abschnitt übergeht, von dem seinerseits eine Entnahmeeinrichtung für Magnesiumammoniumphosphat-Kristalle ausgeht, wobei in dem Innenbereich des oberen Abschnitts zumindest eine Belüftungseinrichtung vorhanden ist, sowie einen zweiten Reaktionsbehälter aufweist, der zur Bildung eines schlammführenden Kreislaufs mit dem ersten Behälter verbunden ist. Dabei ist vorgesehen, dass eine zum zweiten Reaktionsbehälter führende erste Leitung von einem Ablauf des ersten Reaktionsbehälters ausgeht und eine zum ersten Reaktionsbehälter führende zweite Leitung vom Bodenbereich des zweiten Reaktionsbehälters ausgeht.

Es kann vorgesehen sein, dass der zweite Reaktionsbehälter optional mit einem Magnesiumammoniumphosphat-Kristalle abscheidenden Abscheider, wie Zyklonabscheider, über eine Abzugspumpe verbunden ist, der über eine dritte Leitung mit dem ersten Reaktionsbehälter und/oder eine vierte Leitung mit dem zweiten Reaktionsbehälter verbunden ist, über die dem ersten Reaktionsbehälter und/oder dem zweiten Reaktionsbehälter MAP-Kristalle zuführbar sind.

Insbesondere ist vorgesehen, dass innerhalb des inneren Bereichs des ersten Reaktionsbehälters entweder nur im unteren Bereich oder in über dessen Höhe zueinander beabstandeten Ebenen jeweils ein oder mehrere Belüftungseinrichtungen angeordnet sind.

Des Weiteren sollte auf die Schlammoberfläche, vorzugsweise über dem zylinderringförmig ausgebildeten äußeren Bereich des ersten Reaktionsbehälters, eine Zuführung für kationisches Magnesium führen.

In Weiterbildung ist vorgesehen, dass der erste Reaktionsbehälter mit einer Schlammzuführungsleitung verbunden ist, die optional mit einer Vorversäuerungseinrichtung verbunden ist.

Weitere Einzelheiten, Vorteile und Merkmale der Erfindung ergeben sich nicht nur aus den Ansprüchen und den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig.1: eine Prinzipdarstellung einer Anordnung zur Gewinnung von Magnesiumammoniumphosphat,
- Fig. 2: eine Prinzipdarstellung eines ersten Reaktionsbehälters,
- Fig. 3: eine vergrößerte Darstellung einer den Fig. 1 und 2 zu entnehmenden Entnahmeeinrichtung und
- Fig. 4: einen Querschnitt der Entnahmeeinrichtung gemäß Fig. 3

Anhand der Figuren wird ein zweistufiges Verfahren beschrieben, mittels dessen aus Faulschlamm Magnesiumammoniumphosphat-Kristalle ausgefällt werden, ohne dass hierdurch die erfindungsgemäße Lehre eingeschränkt werden soll. Vielmehr bezieht sich diese auch auf einstufige Verfahren zur Ausfällung von Magnesiumammoniumphosphat-Kristallen.

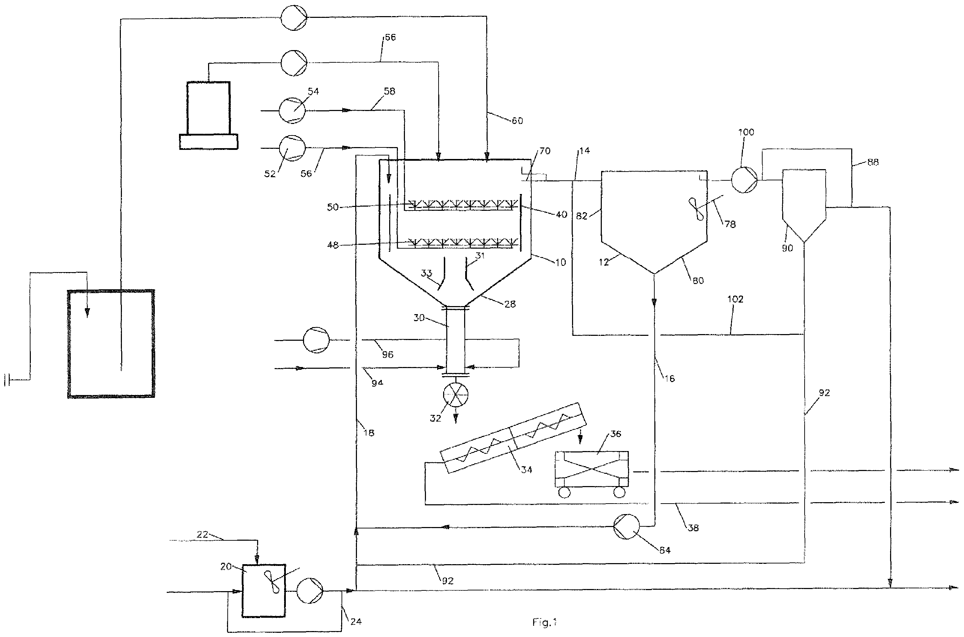

Das zweistufige Verfahren wird rein prinzipiell anhand der Fig. 1 erläutert.

Wesentliche Komponenten der Anordnung zur Rückgewinnung von Phosphor, also zum Ausfällen von Magnesiumammoniumphosphat-Kristallen sind ein erster Reaktionsbehälter 10, in dem ein aerobes Milieu herrscht, und ein zweiter Reaktionsbehälter 12 mit einem anaeroben Milieu. Der erste Reaktionsbehälter 10 ist über eine erste Leitung 14 mit dem zweiten Reaktionsbehälter 12 verbunden, der wiederum zur Rezirkulation von Magnesiumammoniumphosphat-Kristalle bzw. Kristallkeime enthaltendem Schlamm über eine zweite Leitung 16 mit dem ersten Reaktionsbehälter 10 verbunden ist. Dabei mündet die zweite Leitung 16 vorzugsweise in einer Leitung 18, über die Schlamm von einer Schlammfaulungsanlage dem ersten Reaktionsbehälter 10 zugeführt wird.

Gegebenenfalls kann der Faulschlamm vor Beschickung in den ersten Reaktionsbehälter 10 durch Säure, wie beispielsweise H₂SO₄, leicht angesäuert werden, um die Ortho-Phosphat-Konzentration für die Intensivierung anschließender Magnesiumammoniumphosphat (MAP)-Kristallisation im Zulauf zu dem ersten Reaktionsbehälter 10 zu erhöhen.

Entsprechend der Prinzipdarstellung der Fig. 1 kann der Schlamm optional einen Behälter 20 durchströmen, dem über eine Leitung 22 eine Säure zum Beispiel H₂SO₄ zugeführt wird. Sofern eine entsprechende Ansäuerung nicht gewünscht wird, ist eine Bypass-Leitung 24 vorgesehen, um den Schlamm unmittelbar dem ersten Reaktionsbehälter 10 zuführen zu können.

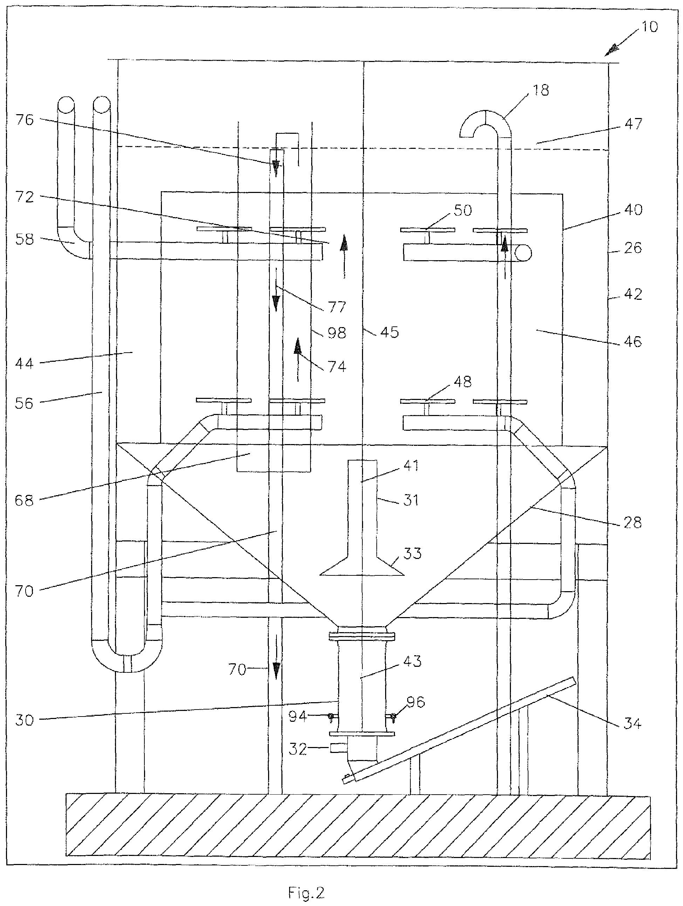

Der erste Reaktionsbehälter 10 besteht entsprechend der Prinzipdarstellung nach Fig. 2 aus einem oberen zylindrischen Abschnitt 26 und einem unteren konus- oder trichterförmig ausgebildeten unteren Abschnitt 28. Der trichterförmige untere Abschnitt 28 geht in eine als Separator zu bezeichnende Entnahmeeinrichtung 30 über, in dem MAP-Kristalle gesammelt werden, um diese nach Öffnen zum Beispiel einer Zellradschleuse 32 oder anderweitig gesicherten Ablasseinrichtung über eine Entwässerungsschnecke 34 einem Container 36 zuzuführen. Das während des Transports über die Schnecke 34 anfallende Entwässerungswasser wird über eine Leitung 38 abgeführt.

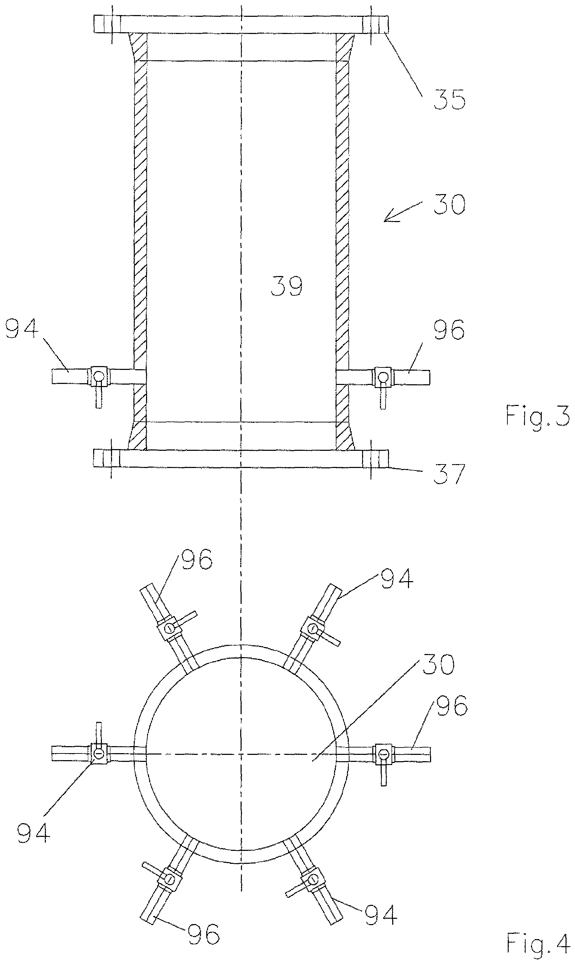

Wesentliche Merkmale sind selbsterklärend den Fig. 3 und 4 zu entnehmen, in denen die Entnahmeeinrichtung 30 - nachstehend Separator genannt - detaillierter dargestellt wird. Der Separator 30 weist eine hohlzylindrische Geometrie auf und ist über einen Flansch 35 mit dem Auslass des konischen unteren Abschnitts 28 des Reaktionsbehälters 10 verbindbar. Bodenseitig, also behälterabgewandt weist der Separator 30 gleichfalls einen Flansch 37 auf, damit der Separator 30 z. B. mit der Zellradschleuse 32 oder einer anderweitig gesicherten Ablasseinrichtung verbunden werden kann.

Im Bodenbereich des Separators 30 sind Anschlüsse 94, 96 vorgesehen, um in den Innenraum 39 des Separators 30 angesammelte MAP-Kristalle unterschiedlicher Größen sowie Schlamm bzw. Schlammflocken - insgesamt Substanzen genannt - aufzulockern und zu spülen. Die Anschlüsse 96 sind dabei für Luft und die Anschlüsse 94 für Wasser vorgesehen. Die Anschlüsse 94, 96 sind alternierend angeordnet, das heißt, dass einem Luftanschluss 96 ein Wasseranschluss 94 folgt und umgekehrt.

Durch pulsierendes und/oder alternierendes und/oder gleichzeitiges Einführen von Luft und Wasser erfolgt ein Auflockern der angesammelten MAP-Kristalle und ein Spülen. Gleichzeitig ist eine Klassierung der MAP-Kristalle gegeben, so dass große, das heißt schwere MAP-Kristalle im unteren Bereich des Separators 30 verbleiben, während kleinere, leichtere MAP-Kristalle, insbesondere Mikro- bzw. Kleinstkristalle sowie Schlammpartikel und -flocken auftreiben und in den Reaktionsbehälter 10 zurückgeschwemmt werden. Hierdurch wird sichergestellt, dass kleine MAP-Kristalle, die mit üblichen Methoden schwer separierbar sind, dem Reaktionsbehälter 10 und somit dem Prozess wieder zugeführt werden. Dies führt zu einem weiteren Wachstum dieser kleinen MAP-Kristalle.

Der Separator 30 ist bodenseitig verschließbar, wohingegen behälterseitig ein Verschluss nicht vorgesehen sein muss.

Um sicherzustellen, dass die aufgeschwemmten MAP-Kristalle tatsächlich in den oberen zylindrischen Abschnitt 26 gelangen, um wachsen zu können, ist erfindungsgemäß vorgesehen, dass oberhalb des Separators 30 eine insbesondere gleichfalls eine Hohlzylindergeometrie aufweisende Führung 31 im trichterförmigen unteren Abschnitt 28 angeordnet ist, deren Längsachse 41 mit der Längsachse 43 des Separators 30 und insbesondere auch mit der Längsachse 45 des Reaktionsbehälters 10 zusammenfällt.

Die Führung 31 weist separatorseitig eine trichterförmige Erweiterung 33 auf, wodurch sichergestellt wird, dass die aufgeschwemmten aus dem Separator 30 austretenden Substanzen durch die Führung 31 hindurch zum oberen Abschnitt 26 des Reaktionsbehälters 10 gelangen. Durch diese Maßnahmen ist sichergestellt, dass die ausgespülten Mikrokristalle und Schlammflocken dem Prozess wieder zugeführt werden, da der trichterförmige untere Abschnitt 28 des Reaktionsbehälters 10 vertikal nach oben hin durchströmt werden kann. Würde eine entsprechende Führung nicht vorgesehen sein, würde die aufwärtsgerichtete Strömung durch die Spülluft und das Spülwasser durch die Aufweitung des Strömungsprofils im trichterförmigen unteren Abschnitt 28 abgebremst werden und die Auftriebskraft verloren gehen, so dass die ausgespülten Substanzen nicht in den nachstehend beschriebenen Strömungskreislauf im zylindrischen oberen Abschnitt 26 des Reaktionsbehälters 10 gelangen. Durch die auch als Führungsrohr zu bezeichnende Führung 31 und die trichterförmige Erweiterung 33 werden die ausgespülten Substanzen erfasst und werden gezielt in den zylindrischen oberen Abschnitt 26 des Reaktionsbehälters 10 bzw. in den Einzugsbereich der aufwärtsgerichteten Strömung desselben geführt.

Mit anderen Worten dient die Führung 31 dazu, ausgespülte Substanzen aus dem Separator 30 unmittelbar in den Innenraum 46 des oberen Abschnitts 26 zu leiten bzw. führen, der von der zylindrischen Trennwand 40 umgeben ist.

Im oberen Abschnitt des ersten Reaktionsbehälters ist eine im Schnitt einen Ring bildende Trennwand 40 eingebaut, die beabstandet zur Außenwandung 42 des oberen Abschnitts 26 verläuft, so dass zwischen der Trennwand 40, die einen Hohlzylinder bildet, und der Außenwand 42 des ersten Reaktionsbehälters 10 ein im Schnitt ringförmiger Außenraum 44 vorliegt, der einem Zylinderringabschnitt gleichkommt. Der obere Rand der Trennwand 40 verläuft beabstandet zum Schlammspiegel 47.

Bodenseitig endet die Trennwand 40 knapp oberhalb des Bereichs, in dem der obere Abschnitt 26 in den unteren Abschnitt 28 übergeht, wie der zeichnerischen Darstellung zu entnehmen ist.

Innerhalb des von der Trennwand 40 umgebenden Innenraums 46 befinden sich Belüftereinrichtungen 48, 50, insbesondere in Form von Membranbelüftern, um in den Innenraum 46, der mit Schlamm/Wasser-Gemisch gefüllt ist, Luft einzutragen.

Der Lufteintrag hat dabei drei Aufgaben zu erfüllen. So wird durch den Lufteintrag ein gerichtetes Strömungsprofil des in dem Reaktionsbehälter 10 strömenden Schlamms bei gleichzeitiger Durchmischung erzielt. Ferner erfolgt eine Klassierung der MAP-Kristalle, wie nachstehend erläutert wird. Schließlich erfolgt ein Gasaustausch im Schlamm, der dem Grunde nach ein Schlamm/Wasser-Gemisch ist, wobei eine CO₂-Strippung und eine Lösung von Sauerstoff erfolgt.

Die Durchmischung des ersten Reaktionsbehälters 10 bzw. die Ausbildung der gerichteten Strömung im oberen Teil 26 des Reaktionsbehälters 10 wird durch den resultierenden Dichteunterschied zwischen dem unbelüfteten sich innerhalb des Außenraums 44 befindenden Medium und dem belüfteten Medium im Innenraum 46 sowie durch die Auftriebskraft der aus den Belüftereinrichtungen 48, 50 austretenden Luftblasen erzeugt. Durch den Unterschied zwischen dem "schweren" Medium im ringförmigen Außenraum 44 und dem im Innenraum 46 vorhandenen "leichteren" Medium wird der Schlamm bzw. das Schlamm/Wasser-Gemisch aus dem Ringraum 44 zur Behältermitte angesaugt, strömt folglich um den unteren Rand der Trennwand 40 herum.

Innerhalb des Innenraums 46 wird der Schlamm mit Luft durchsetzt, um sodann in Auftriebsrichtung im Innenraum 46 in einer Vertikalströmung zur Schlammoberfläche 47 getrieben zu werden. An der Schlammoberfläche 47 gast das Schlamm/Wasser-Gemisch aus und strömt sodann horizontal oberhalb des oberen Randes der Trennwand 40 nach außen zu dem Ringraum 44. Im äußeren unbelüfteten Ringraum 44 erfolgt sodann die vertikale Abwärtsbewegung in Richtung des unteren Abschnitts 28.

Antrieb dieses beschriebenen Kreislaufes ist die Energieeintragung über die adiabate Kompression von Luft in einem Verdichter und der anschließenden polytropen Expansion nach der Eintragung in das Schlamm/Wasser-Gemisch. Die Luft wird mittels Gebläse 52, 54 über Leitungen 56, 58 den Membranbelüftern 48, 50 zugeführt.

Damit MAP-Kristalle ausfallen können, bedarf es des in dem Schlamm vorhandenen Ammoniums sowie kationischen Magnesiums, das im Ausführungsbeispiel in Form von Magnesiumchlorid zugeführt wird, und zwar auf die Schlammoberfläche 47, vorzugsweise über dem Ringraum 44. In der Prinzipdarstellung der Figur 1 wird das Magnesiumchlorid über eine Leitung 60 zugegeben.

Durch den Energieeintrag wird auch die Auftriebskraft im Innenraum 46 des oberen Abschnitts 26 des ersten Reaktionsbehälters 10 eingestellt. Dieser klassiert die ausfallende MAP-Kristallgröße. Je größer die Kristallstruktur, also je größer das Gewicht der MAP-Kristalle ist, desto größer ist die schwerkraftbedingte Sedimentationsgeschwindigkeit. Ab einer bestimmten Größe und somit eines Gewichts der Kristalle reicht die Auftriebskraft im Innenraum 46 nicht mehr aus, um die Kristalle in die vertikale Aufwärtsströmung mitzunehmen, so dass die Kristalle in Richtung des unteren Abschnitts 28 fallen und dort sedimentieren und sich in dem Separator 30 ansammeln. Kleinere Kristalle werden demgegenüber mit der Strömung mitgerissen und werden im Prozesskreislauf mitgeführt, bis eine Größe erreicht ist, dass ein Absetzen in dem konus- bzw. trichterförmigen unteren Abschnitt 28 und damit in dem Separator 30 erfolgen kann.

Der Lufteintrag über die Membranbelüfter 48, 50 führt zu einer Strippung von CO₂ aus dem Schlamm/Wasser-Gemisch. Hierdurch wird der pH-Wert angehoben, und zwar insbesondere auf einen Wert zwischen 7,5 und 8,2. Die pH-Wert-Anhebung initiiert mit der gleichzeitigen Bereitstellung von Magnesium über die Dosierung von Magnesiumchlorid oder einer anderen geeigneten Magnesiumverbindung die MAP-Kristallbildung bzw. das Kristallwachstum.

Der Faulschlamm selbst, der über die Leitung 18 dem ersten Reaktionsbehälter 10 zugeführt wird, wird entsprechend der Fig. 2 auf den Schlammspiegel 47 des ersten Reaktionsbehälters 10 zugeführt.

Ferner besteht die Möglichkeit, über eine Leitung 66 einen Entschäumer zur Reduzierung der Schaumbildung auf die Schlammoberfläche 47 zuzuleiten oder direkt in die Zuleitung 18.

Im Außenraum zwischen der Trennwand 40 und der Außenwand 42, also im Ringraum 44 befindet sich ein Ablaufschacht 98, der in einem Rohr 70 mündet, von dem ausgehend der Schlamm über die erste Leitung 14 dem zweiten Reaktionsbehälter 12 zugeführt wird.

Der Ablauf aus dem ersten Reaktionsbehälter 10 erfolgt nach dem Verdrängerprinzip. Mit der Beschickung des ersten Reaktionsbehälters 10 mit Schlamm wird im gleichen Volumenanteil Schlamm aus dem ersten Reaktionsbehälter 10 zeitgleich ausgeschwemmt.

Die Verdrängung erfolgt aus dem unteren Bereich des oberen Abschnitts 26 aus dem Ringraum 44 in den Ablaufschacht 98 hinein. Ablaufendes Schlamm/Wasser-Gemisch fließt in dem Ablaufschacht 98 - in der zeichnenden Darstellung entsprechend der Richtung des Pfeils 74 - aufwärts, um sodann über eine Ablaufschwelle 76 in den Auslaufbereich zu gelangen, wie durch den Pfeil 77 verdeutlicht wird.

Der über die erste Leitung 14 in den zweiten Reaktionsbehälter 12 gelangende Schlamm bzw. das Schlamm/Wasser-Gemisch ist einem anaeroben Milieu ausgesetzt. Um dies sicherzustellen, erfolgt nur ein sanftes Durchmischen (Rührer 78), ohne eine Belüftung vorzunehmen. Sofern im ersten Reaktionsbehälter 10 unter aeroben Bedingungen im Faulschlamm enthaltene Bakterien parallel zur Ortho-Phosphat-Fällung vermehrt Phosphat aufgenommen haben, findet im zweiten Reaktionsbehälter 12 unter den anaeroben Bedingungen eine Phosphorrücklösung statt, die zu einer weiteren MAP-Kristallbildung bzw. einem Kristallwachstum führt.

Eine vorgegebene Schlamm/Wasser-Gemischmenge wird sodann kontinuierlich oder in Intervallen, also batchweise, aus dem gleichfalls eine Konus- oder Trichterform aufweisenden unteren Abschnitt 80 des zweiten Reaktionsbehälters 12, dessen oberer Bereich eine Zylinderform aufweisen sollte, abgezogen, und über die zweite Leitung 16 in den ersten Reaktionsbehälter 10 rezirkuliert, wie zuvor erläutert worden ist. Hierzu befindet sich in der zweiten Leitung 16 eine Pumpe 84.

Der Ablauf aus dem zweiten Reaktionsbehälter 12 erfolgt über eine Abzugspumpe 100. Zulaufendes Schlamm/Wasser-Gemisch, das nicht in den ersten Reaktionsbehälter 10 rezirkuliert wird, wird über diese Abzugspumpe 100 abgezogen und abgeleitet. Dabei besteht die Möglichkeit, den Schlamm entweder unmittelbar über eine Leitung 88 einer Entwässerung zuzuführen oder aber optional durch einen Abscheider 90, wie Hydrozyklon, zu leiten, um in dem Schlamm noch vorhandene MAP-Kristalle bzw. Kristallkeime abzuscheiden, die sodann über eine dritte Leitung 92 dem ersten Reaktionsbehälter 10 zugeführt werden und/oder über eine vierte Leitung 102 zurück in den zweiten Reaktionsbehälter 12 geleitet werden. Hierbei handelt es sich im Wesentlichen um Mikrokristalle.

Die in dem ersten Reaktionsbehälter 10 ausgeschiedenen MAP-Kristalle gelangen in den Separator 30, der vom Tiefstpunkt des unteren Abschnitts 28 des Reaktionsbehälters 10 ausgeht.

Zum Separator 30 ist anzumerken, dass dieser zur Funktion des Separierens behälterseitig verschlussfrei ausgebildet sein kann. Allerdings kann ein Verschluss vorgesehen sein, der den Separator von dem Behälter trennt, um z.B. Wartungsarbeiten, wie z.B. an den Anschlüssen 94, 96, durchzuführen,

Der Separator 30 kann z.B. aus Edelstahl bestehen und gegebenenfalls eine Antihaftbeschichtung, insbesondere im Inneren, aufweisen, oder kann auch in Stahl mit im Inneren mit Antihaftbeschichtung ausgeführt sein. Typische Durchmesser eines entsprechenden Separators 30 liegen zwischen 300 mm und 600 mm bei einer Baulänge zwischen 400 mm und 1500 mm.

Die Führung 31 kann ebenfalls aus Edelstahl oder Stahl bestehen und gegebenenfalls mit einer Antihaftbeschichtung versehen sein. Typische Durchmesser sollten 300 mm bis 600 mm betragen. Die Länge entspricht maximal der Höhe des trichter- oder konusförmigen unteren Abschnitts 28 des ersten Reaktionsbehältnisses 10. Dimensionierung bzw. Anordnung hat dabei so zu erfolgen, das die MAP-Kristalle dem Separator 30 strömungstechnisch ungestört zufließen können.

Das Volumen des ersten Reaktionsbehälters 10 sollte dem 2- bis 20-fachen der stündlichen volumetrischen Zulaufmenge zum ersten Reaktionsbehälter 10 entsprechen. Gleiche Dimensionierungen sind bezüglich des zweiten Reaktionsbehälters 12 zu bevorzugen. Bezüglich des Lufteintrags über die Membranfilter 48, 50 ist anzumerken, dass die Menge dem 5- bis 35-fachen der stündlichen volumetrischen Zulaufmenge in den ersten Reaktionsbehälter 10 betragen sollte.

Die Zudosierung von Magnesiumchlorid hängt von der Konzentration der PO₄-, NH₄- und Mg-Ionen im zufließenden Schlamm ab.

Im zweiten Reaktionsbehälter 12 soll erfindungsgemäß ein anaerobes Milieu herrschen. Daher erfolgt auch nur ein sanftes Durchmischen. Der Energieeintrag durch den Rührer 78 sollte 2 - 20 Watt pro m³ des Schlamm-/Wasser-Gemischs betragen.

Sofern die optional vorgesehene Vorversäuerung durchgeführt wird, sollte der pH-Wert in der Vorversäuerung nicht unter 5,0 sinken.

## Patentansprüche

1. Verfahren zur Rückgewinnung von Magnesiumammoniumphosphat aus Schlamm, der einem Reaktionsbehälter (10) zugeführt wird, in dem ein aerobes Milieu herrscht und in dem der Schlamm durch Belüftung unterstützt in einem Kreislauf geführt wird, wobei dem Schlamm kationisches Magnesium, wie Magnesiumchlorid, zugegeben wird und aus dem Schlamm ausgefällte Magnesiumammoniumphosphat-Kristalle über eine im Bodenbereich des Reaktionsbehälters vorhandene Entnahmeeinrichtung (30) entfernt werden,
**dadurch gekennzeichnet,**
**dass** in der Entnahmeeinrichtung (30) gesammelte Magnesiumammoniumphosphat-Kristalle enthaltende Substanzen aufgelockert und gespült werden, wobei Gas und Flüssigkeit in die Entnahmeeinrichtung (30) pulsierend und/oder alternierend und/oder gleichzeitig eingeleitet werden, und dass aus der Entnahmeeinrichtung (30) behälterseitig austretende Substanzen mittels einer Führung (31) durch einen trichter- oder konusförmig ausgebildeten unteren Abschnitt (28) des Reaktionsbehälters (10) hindurchgeführt und in einen angrenzenden zylindrischen oberen Abschnitt (26) dortiger Strömung ausgesetzt werden.

2. Verfahren nach Anspruch 1, **dadurch gekennzeichnet, dass** das Gas, wie Luft, und die Flüssigkeit, wie Wasser, insbesondere Brauchwasser, im Bodenbereich des vorzugsweise eine hohlzylindrische Innengeometrie aufweisenden Innenraums der Entnahmeeinrichtung (30) eingeleitet wird.

3. Anordnung zur Rückgewinnung von Magnesiumammoniumphosphat aus Schlamm, umfassend einen Reaktionsbehälter (10) mit einem zylindrischen oberen Abschnitt (26), der in einen trichter- oder konusförmig ausgebildeten unteren Abschnitt (28) übergeht, von dem seinerseits eine Entnahmeeinrichtung (30) für Magnesiumammoniumphosphat-Kristalle ausgeht, wobei in dem oberen Abschnitt (26) zumindest eine Belüftungseinrichtung (48, 50) vorhanden ist,
**dadurch gekennzeichnet,**
**dass** die Entnahmeeinrichtung (30) zumindest einen ersten Anschluss (96) für einzuleitendes Gas und zumindest einen zweiten Anschluss (94) für einzuleitende Flüssigkeit aufweist, und dass im unteren Abschnitt (28) eine auf die Entnahmeeinrichtung (30) ausgerichtete eine hohlzylinderförmige Geometrie mit entnahmeeinrichtungsseitig verlaufender Erweiterung (33) aufweisende Führung (31) zum Leiten von in der Entnahmeeinrichtung (30) aufgeschwemmten Substanzen in den zylindrischen oberen Abschnitt (26) angeordnet ist.

4. Anordnung nach Anspruch 3,
**dadurch gekennzeichnet,**
**dass** insbesondere im Bodenbereich der Entnahmeeinrichtung (30) mehrere erste Anschlüsse (96) und/oder mehrere zweite Anschlüsse (94), vorzugsweise gleichmäßig verteilt um den Umfang der Entnahmeeinrichtung, vorgesehen sind.

5. Anordnung nach Anspruch 3 oder 4,
**dadurch gekennzeichnet,**
**dass** alternierend erste und zweite Anschlüsse (96, 94) mit der Entnahmeeinrichtung (30) verbunden sind.

6. Anordnung nach zumindest einem der Ansprüche 3 bis 5,
**dadurch gekennzeichnet,**
**dass** Magnesiumammoniumphosphat-Kristalle sammelnder Innenraum der Entnahmeeinrichtung (30) eine Zylinder- oder Konusgeometrie aufweist.

7. Anordnung nach zumindest einem der Ansprüche 3 bis 6,
**dadurch gekennzeichnet,**
**dass** die Entnahmeeinrichtung (30) behälterseitig verschlussfrei ausgebildet ist.

8. Anordnung nach zumindest einem der Ansprüche 3 bis 7,
**dadurch gekennzeichnet,**
**dass** die Entnahmeeinrichtung (30) bodenseitig eine Verschlusseinrichtung, wie Absperrarmatur oder Schleusenrad (32), aufweist.

9. Anordnung nach zumindest einem der Ansprüche 3 bis 8,
**dadurch gekennzeichnet,**
**dass** Längsachse der Führung (31) mit Längsachse der Entnahmeeinrichtung (30) und vorzugsweise mit Längsachse des Reaktionsbehälters (10) zusammenfällt.

## Claims

1. Method for recovering magnesium ammonium phosphate from sludge supplied to a reaction tank (10) in which an aerobic environment prevails and in which the sludge is guided in a cycle supported by aeration, with cationic magnesium such as magnesium chloride being added to the sludge and magnesium ammonium phosphate crystals precipitated from the sludge being removed via an extraction device (30) provided in the floor area of the reaction tank,
**wherein**
substances collected in the extraction device (30) and containing magnesium ammonium phosphate crystals are loosened up and/or flushed, where gas and liquid are introduced into the extraction device (30) in a pulsating manner and/or alternatingly and/or simultaneously, and substances exiting the extraction device (30) on the tank side by means of a guide (31) are passed through a funnel-shaped or conically designed lower section (28) of the reaction tank (10) and subjected in an adjoining cylindrical upper section (26) to the flow there.

2. Method according to claim 1,
**wherein**
the gas, such as air, and the liquid, such as water, in particular service water, is introduced in the floor area of the interior of the extraction device (30), which preferably has a hollow-cylindrical internal geometry.

3. Arrangement for recovering magnesium ammonium phosphate from sludge, comprising a reaction tank (10) with a cylindrical upper section (26) that merges into a funnel-shaped or conically designed lower section (28) from which in turn extends an extraction device (30) for magnesium ammonium phosphate crystals, at least one aerator device (48, 50) being provided in the upper section (26),
**wherein**
the extraction device (30) has at least one first connection (96) for gas to be introduced and at least one second connection (94) for liquid to be introduced, and a guide (31) aligned with the extraction device (30) and having a hollow-cylindrical geometry with widening (33) on the extraction device side for passing substances washed upward in the extraction device (30) into the cylindrical upper section (26) is arranged in the lower section (28).

4. Arrangement according to claim 3,
**wherein**
in the floor area of the extraction device (30) in particular, several first connections (96) and/or several second connections (94) are provided preferably evenly distributed around the circumference of the extraction device.

5. Arrangement according to claim 3 or 4,
**wherein**
first and second connections (96, 94) are connected alternatingly to the extraction device (30).

6. Arrangement according to at least one of claims 3 to 5,
**wherein**
the interior of the extraction device (30) collecting magnesium ammonium phosphate crystals has a cylindrical or conical geometry.

7. Arrangement according to at least one of claims 3 to 6,
**wherein**
the extraction device (30) is designed closure-free on the tank side.

8. Arrangement according to at least one of claims 3 to 7,
**wherein**
the extraction device (30) has on the floor side a closure device, such as a shutoff valve or rotary valve (32).

9. Arrangement according to at least one of claims 3 to 8,
**wherein**
the longitudinal axis of the guide (31) coincides with the longitudinal axis of the extraction device (30) and preferably with the longitudinal axis of the reaction tank (10).

## Revendications

1. Procédé de récupération de phosphate d'ammonium et de magnésium à partir de boue qui est distribuée à une cuve de réaction (10) dans laquelle règne un milieu aérobie et dans laquelle la boue est guidée dans un circuit sous l'assistance d'une aération, sachant que du magnésium cationique, tel que du chlorure de magnésium, est ajouté à la boue et que des cristaux de phosphate d'ammonium et de magnésium précipités à partir de la boue sont enlevés par le biais d'un dispositif d'extraction (30) présent au fond de la cuve de réaction,
**caractérisé en ce**
**que** des substances contenant des cristaux de phosphate d'ammonium et de magnésium et collectés dans le dispositif d'extraction (30) sont détachés et rincés, sachant que du gaz et du liquide sont introduits dans le dispositif d'extraction (30) de manière pulsée et/ou alternée et/ou simultanée, et que des substances sortant du dispositif d'extraction (30) côté cuve sont guidées au moyen d'un guidage (31) à travers une section inférieure (28) de la cuve de réaction (10), conçue sous forme d'entonnoir ou de cône et exposé au courant présent dans une section supérieure (26) cylindrique, avoisinante.

2. Procédé selon la revendication 1,
**caractérisé en ce**
**que** le gaz, tel que l'air, le liquide tel que l'eau, notamment des eaux usées, sont introduits dans le fond du compartiment interne du dispositif d'extraction (30), présentant de préférence une géométrie intérieure en forme de cylindre creux.

3. Dispositif de récupération de phosphate d'ammonium et de magnésium à partir de boue, comprenant une cuve de réaction (10) avec une section supérieure (26) cylindrique qui se prolonge dans une section inférieure (28) en forme d'entonnoir ou de cône de laquelle part de son côté un dispositif d'extraction (30) pour les cristaux de phosphate d'ammonium et de magnésium, sachant qu'au moins un dispositif d'aération (48, 50) est présent dans la section supérieure (26),
**caractérisé en ce**
**que** le dispositif d'extraction (30) présente au moins un premier raccord (96) pour le gaz à introduire et au moins un second raccord (94) pour le liquide à introduire, et qu'est disposé dans la section inférieure (28), un guidage (31) orienté au-dessus du dispositif d'extraction (30), présentant une géométrie en forme de cylindre creux avec une extension (33) s'étendant du côté du dispositif d'extraction pour guider dans la section supérieure (26) cylindrique les substances en suspension dans le dispositif d'extraction (30).

4. Dispositif selon la revendication 3,
**caractérisé en ce**
**que** sont prévus, notamment au fond du dispositif d'extraction (30), plusieurs premiers raccords (96) et/ou plusieurs seconds raccords (94), répartis de préférence uniformément autour de la circonférence du dispositif d'extraction.

5. Dispositif selon la revendication 3 ou 4,
**caractérisé en ce**
**que** des premiers et seconds raccords (96, 94) sont reliés, de manière alternée, au dispositif d'extraction (30).

6. Dispositif selon au moins une des revendications 3 à 5,
**caractérisé en ce**
**que** le compartiment intérieur du dispositif d'extraction (30) collectant des cristaux de phosphate d'ammonium et de magnésium présente une géométrie en forme de cylindre ou de cône.

7. Dispositif selon au moins une des revendications 3 à 6,
**caractérisé en ce**
**que** le dispositif d'extraction (30) est conçu sans bouchon côté cuve.

8. Dispositif selon au moins une des revendications 3 à 7,
**caractérisé en ce**
**que** le dispositif d'extraction (30) présente côté fond un dispositif de fermeture, tel qu'un robinet de sectionnement ou un sas rotatif (32).

9. Dispositif selon au moins une des revendications 3 à 8,
**caractérisé en ce**
**que** l'axe longitudinal du guidage (31) coïncide avec l'axe longitudinal du dispositif d'extraction (30) et, de préférence, avec l'axe longitudinal de la cuve de réaction (10).
